# EUROPEAN PATENT APPLICATION

(11) **EP 4 328 935 A1**
(43) Date of publication of application: **28.02.2024**
(21) Application number: 21937987.2
(22) Date of filing: 27.12.2021
(51) Int. Cl.: H01B 1/06, H01B 1/08, H01B 13/00, H01M 10/0562

(54) **SOLID ELECTROLYTE COMPOSITION, SOLID ELECTROLYTE MATERIAL, AND METHOD FOR PRODUCING SOLID ELECTROLYTE COMPOSITION**

(30) Priority: 19.04.2021 JP 2021070145
(71) Applicant: Panasonic Intellectual Property Management Co., Ltd., Kadoma-shi, Osaka 571-0057 (JP)
(72) Inventor: KUBO, Takashi, Kadoma-shi, Osaka 571-0057 (JP); MIYATAKE, Kazufumi, Kadoma-shi, Osaka 571-0057 (JP); KATAYAMA, Ryuhei, Kadoma-shi, Osaka 571-0057 (JP); TANAKA, Yoshiaki, Kadoma-shi, Osaka 571-0057 (JP); MIYAZAKI, Akinobu, Kadoma-shi, Osaka 571-0057 (JP)
(74) Representative: Eisenführ Speiser
(86) International application number: PCT/JP2021/048646
(87) International publication number: WO 2022/224497

(57) **Abstract**

A solid electrolyte composition of the present disclosure includes: a solid electrolyte including Li, M1, O, and X1; a halide including M2 and X2; and an organic solvent. The M1 is at least one selected from the group consisting of Nb and Ta. The M2 is at least one selected from the group consisting of Nb and Ta. The X1 is at least one selected from the group consisting of F, Cl, Br, and I. The X2 is at least one selected from the group consisting of F, Cl, Br, and I.

## Description

### TECHNICAL FIELD

The present disclosure relates to a solid electrolyte composition, a solid electrolyte material, and a method for producing a solid electrolyte composition.

### BACKGROUND ART

Patent Literature 1 discloses a solid electrolyte composition using a sulfide solid electrolyte.

### CITATION LIST

### Patent Literature

Patent Literature 1: WO 2018/168505 A1

### SUMMARY OF INVENTION

### Technical Problem

When a solid electrolyte is used, for example, when a solid electrolyte is pulverized, the solid electrolyte may be mixed with an organic solvent. At this time, the solid electrolyte may be decreased in ionic conductivity. Accordingly, it is desired to suppress a decrease in the ionic conductivity of the solid electrolyte.

### Solution to Problem

The present disclosure provides a solid electrolyte composition including:
a solid electrolyte including Li, M1, O, and X1;
a halide including M2 and X2; and
an organic solvent, wherein
the M1 is at least one selected from the group consisting of Nb and Ta,
the M2 is at least one selected from the group consisting of Nb and Ta,
the X1 is at least one selected from the group consisting of F, Cl, Br, and I, and
the X2 is at least one selected from the group consisting of F, Cl, Br, and I.

### Advantageous Effects of Invention

According to the present disclosure, it is possible to provide a solid electrolyte composition suitable for suppressing a decrease in the ionic conductivity of the solid electrolyte.

### BRIEF DESCRIPTION OF DRAWINGS

FIG. 1 is a flowchart showing an example of a method for producing a solid electrolyte material.
FIG. 2 is a schematic view showing a method for evaluating the lithium-ion conductivity of the solid electrolyte material.

### DESCRIPTION OF EMBODIMENTS

### (Findings on which the present disclosure is based)

In the field of secondary batteries for which a higher energy density and a higher capacity are required, organic electrolyte solutions obtained by dissolving an electrolyte salt in an organic solvent have been used conventionally and predominantly. Secondary batteries using an organic electrolyte solution has presented a concern for liquid leakage. Another issue that has been discussed is a possible increase in the amount of heat generated in case of a short circuit or the like.

On the other hand, all-solid-state secondary batteries using an inorganic solid electrolyte instead of an organic electrolyte solution are increasingly drawing attention. All-solid-state secondary batteries are free from liquid leakage. Incombustibility of inorganic solid electrolytes is expected to suppress heat generation in case of a short circuit or the like.

Known inorganic solid electrolytes for all-solid-state secondary batteries include sulfide-based solid electrolytes, which include sulfur as a main component, and oxide-based solid electrolytes, which include a metal oxide as a main component. However, when reacting with moisture, sulfide-based solid electrolytes may generate hydrogen sulfide, which is toxic. Oxide-based solid electrolytes have a low ionic conductivity. For these reasons, development of a novel solid electrolyte having a high ionic conductivity is desired.

An example of a novel solid electrolyte that is anticipated is an oxyhalide-based solid electrolyte including a lithium element, a tantalum element, an oxygen element, and at least one halogen element. An oxyhalide-based solid electrolyte refers to a solid electrolyte including an oxygen element and a halogen element.

To put all-solid-state secondary batteries to practical use, a technique is required for preparing a fluid composition including a solid electrolyte, and applying the composition onto the surfaces of the electrodes or the current collectors thus to form a solid electrolyte layer. Moreover, to reduce the thickness of the solid electrolyte layer, a technique is also required for micronizing the solid electrolyte in the order of several micrometers.

To micronize a solid electrolyte, the solid electrolyte may be mixed with an organic solvent and pulverized.

Thus, the present inventors studied feasibility of micronization of an oxyhalide-based solid electrolyte by a wet process using an organic solvent, on the basis of the lithium-ion conductivity as a measure. As a result, the study found that pulverization of an oxyhalide-based solid electrolyte by a wet process using an organic solvent may greatly decrease the lithium-ion conductivity of the oxyhalide-based solid electrolyte as compared with that before the pulverization. The similar phenomenon may occur even when no pulverization is performed, namely, even when the solid electrolyte composition is molded into a predetermined shape and the organic solvent is removed. From the above viewpoint, the configuration of the present disclosure was achieved.

### (Overview of one aspect according to the present disclosure)

A solid electrolyte composition according to a first aspect of the present disclosure includes:
a solid electrolyte including Li, M1, O, and X1;
a halide including M2 and X2; and
an organic solvent, wherein
the M1 is at least one selected from the group consisting of Nb and Ta,
the M2 is at least one selected from the group consisting of Nb and Ta,
the X1 is at least one selected from the group consisting of F, Cl, Br, and I, and
the X2 is at least one selected from the group consisting of F, Cl, Br, and I.

According to the above configuration, it is possible to provide a solid electrolyte composition suitable for suppressing a decrease in the ionic conductivity of the solid electrolyte.

In a second aspect of the present disclosure, for example, in the solid electrolyte composition according to the first aspect, the X1 may include Cl. By including Cl, a solid electrolyte having a high ionic conductivity can be provided.

In a third aspect of the present disclosure, for example, in the solid electrolyte composition according to the first or second aspect, the M1 may include Ta. By including Ta, a solid electrolyte having a high ionic conductivity can be provided.

In a fourth aspect of the present disclosure, for example, in the solid electrolyte composition according to any one of the first to third aspects, the solid electrolyte may include LiTaOCl₄. LiTaOCl₄ is suitable for applying the technique of the present disclosure.

In a fifth aspect of the present disclosure, for example, in the solid electrolyte composition according to any one of the first to fourth aspects, the X2 may include Cl. According to such a configuration, a decrease in the ionic conductivity of the solid electrolyte can be effectively suppressed.

In a sixth aspect of the present disclosure, for example, in the solid electrolyte composition according to any one of the first to fifth aspects, the M2 may include Ta. According to such a configuration, a decrease in the ionic conductivity of the solid electrolyte can be effectively suppressed.

In a seventh aspect of the present disclosure, for example, in the solid electrolyte composition according to any one of the first to sixth aspects, the halide may include TaCl₅. According to TaCl₅, a decrease in the ionic conductivity of the solid electrolyte can be effectively suppressed.

In an eighth aspect of the present disclosure, for example, in the solid electrolyte composition according to any one of the first to seventh aspects, the M1 may be the same as the M2. In this case, the M2, which is a constituent element of the halide, is less prone to adversely affect a solid electrolyte material prepared by removing the organic solvent from the solid electrolyte composition.

In a ninth aspect of the present disclosure, for example, in the solid electrolyte composition according to any one of the first to eighth aspects, the X1 may be the same as the X2. In this case, the X2, which is a constituent element of the halide, is less prone to adversely affect a solid electrolyte material prepared by removing the organic solvent from the solid electrolyte composition.

In a tenth aspect of the present disclosure, for example, in the solid electrolyte composition according to any one of the first to ninth aspects, the organic solvent may include at least one selected from the group consisting of a halogen-group-containing compound and a hydrocarbon. These are suitable as the solvent for the solid electrolyte composition.

In an eleventh aspect of the present disclosure, for example, in the solid electrolyte composition according to any one of the first to tenth aspects, the organic solvent may include at least one selected from the group consisting of tetralin, ethylbenzene, mesitylene, pseudocumene, xylene, cumene, 1,2,4-trichlorobenzene, chlorobenzene, 2,4-dichlorobenzene, o-chlorotoluene, 1,3-dichlorobenzene, p-chlorotoluene, 1,2-dichlorobenzene, 1,4-dichlorobutane, 2,4-dichlorotoluene, 3,4-dichlorotoluene, and pentane. The solid electrolyte including an oxygen element and a halogen element has a favorable dispersibility in these organic solvents.

In a twelfth aspect of the present disclosure, for example, in the solid electrolyte composition according to any one of the first to eleventh aspects, a ratio of a mass of the halide to a sum of a mass of the solid electrolyte and the mass of the halide may be 1% or more and 50% or less. According to such a configuration, a decrease in the ionic conductivity of the solid electrolyte can be effectively suppressed.

In a thirteenth aspect of the present disclosure, for example, in the solid electrolyte composition according to the twelfth aspect, the ratio may be 10% or more and 50% or less. In the case where the ratio is 50% or less, the solid electrolyte material can have a higher ionic conductivity.

A solid electrolyte material according to a fourteenth aspect of the present disclosure includes:
a solid electrolyte including Li, M1, O, and X1; and
a halide including M2 and X2, wherein
the M1 is at least one selected from the group consisting of Nb and Ta,
the M2 is at least one selected from the group consisting of Nb and Ta,
the X1 is at least one selected from the group consisting of F, Cl, Br, and I, and
the X2 is at least one selected from the group consisting of F, Cl, Br, and I.

The above solid electrolyte material can exhibit the ionic conductivity inherent in the solid electrolyte.

A method for producing a solid electrolyte composition according to a fifteenth aspect of the present disclosure is a method for producing the solid electrolyte composition according to any one of the first to thirteenth aspects, the method including:
synthesizing a solid electrolyte with use of a raw material including a halide; and
mixing the solid electrolyte, the halide, and an organic solvent to prepare the solid electrolyte composition.

According to the above configuration, it is possible to provide a solid electrolyte composition suitable for suppressing a decrease in the ionic conductivity of the solid electrolyte.

Embodiments of the present disclosure will be described below with reference to the drawings. The present disclosure is not limited to the embodiments below.

### (Embodiment 1)

A solid electrolyte composition according to Embodiment 1 includes a solid electrolyte, a halide, and an organic solvent. The solid electrolyte includes Li, M1, O, and X1. M1 is at least one selected from the group consisting of Nb and Ta. X1 is at least one selected from the group consisting of F, Cl, Br, and I. The solid electrolyte is a so-called oxyhalide-based solid electrolyte. The halide includes M2 and X2. M2 is at least one selected from the group consisting of Nb and Ta. X2 is at least one selected from the group consisting of F, Cl, Br, and I.

According to the above configuration, it is possible to provide a solid electrolyte composition suitable for suppressing a decrease in the ionic conductivity of the solid electrolyte. For example, even in the case where the organic solvent is removed after the solid electrolyte is pulverized by wet pulverization using the solid electrolyte composition, it is possible to obtain a solid electrolyte material that can sufficiently exhibit the ionic conductivity inherent in the solid electrolyte. The solid electrolyte material may be a solid electrolyte powder, or may be a solid electrolyte sheet.

The solid electrolyte composition may be in the form of paste, or may be in the form of dispersion. In the solid electrolyte composition, the solid electrolyte that is particulate and/or massive is mixed with the organic solvent. The viscosity of the solid electrolyte composition can be adjusted as appropriate. For example, in the case where coating is performed by spraying or the like, the viscosity of the solid electrolyte composition is relatively low. In the case where coating is performed by doctor blading or the like, the viscosity of the solid electrolyte composition is relatively high. To pulverize the solid electrolyte that is particulate or massive, the viscosity of the solid electrolyte composition can be adjusted as appropriate according to the pulverization method.

### (Solid electrolyte)

The solid electrolyte includes Li, M1, O, and X1. In the solid electrolyte, X1 may include Cl. X1 may be Cl. By including Cl, a solid electrolyte having a high ionic conductivity can be provided.

In the solid electrolyte, M1 may include Ta. M1 may be Ta. By including Ta, a solid electrolyte having a high ionic conductivity can be provided.

The solid electrolyte may consist of Li, M1, O, and X1. The solid electrolyte may include LiTaOCl₄, or may be LiTaOCl₄. LiTaOCl₄ exhibits a high ionic conductivity, and on the other hand, tends to exhibit a decreased ionic conductivity due to a wet process. Accordingly, LiTaOCl₄ is suitable for applying the technique of the present disclosure.

As used herein, the phrase "consist of" means that other components are not intentionally added except for inevitable impurities.

The solid electrolyte may be free of sulfur (S). In this case, generation of hydrogen sulfide is prevented.

The solid electrolyte may be one oxyhalide-based solid electrolyte having a single composition, or may be a mixture of two or more oxyhalide-based solid electrolytes having composition different from each other.

The shape of the solid electrolyte is not limited to any particular shape. The solid electrolyte may be particulate. Examples of the particulate shape include an acicular shape, a spherical shape, and an ellipsoidal shape. The solid electrolyte may be massive. The solid electrolyte may be in the shape of a pellet or a plate.

The solid electrolyte is prepared, for example, by mechanochemical milling. Specifically, a plurality of raw material powders are mixed. The mixing ratio of the plurality of raw material powders is adjusted so as to obtain a solid electrolyte having a desired composition. Subsequently, the raw material powders are reacted with each other with a mixer such as a planetary ball mill thus to obtain a reaction product. The reaction product may be fired in a vacuum or in an inert atmosphere. Thus, the solid electrolyte having the desired composition is obtained.

### (Halide)

The halide includes M2 and X2. X2 may include Cl. According to such a configuration, a decrease in the ionic conductivity of the solid electrolyte can be effectively suppressed. X2 may be Cl.

M2 may include Ta. According to such a configuration, a decrease in the ionic conductivity of the solid electrolyte can be effectively suppressed. M2 may be Ta.

The halide may consist of M2 and X2. The halide may include TaCl₅, or may be TaCl₅. According to TaCl₅, a decrease in the ionic conductivity of the solid electrolyte can be effectively suppressed.

M1 in the composition of the solid electrolyte may be the same as M2 in the composition of the halide. That is, in the case where M1 is Ta, M2 is Ta as well. In this case, M2, which is a constituent element of the halide, is less prone to adversely affect a solid electrolyte material prepared by removing the organic solvent from the solid electrolyte composition.

X1 in the composition of the solid electrolyte may be the same as X2 in the composition of the halide. That is, in the case where X1 is Cl, X2 is Cl as well. In this case, X2, which is a constituent element of the halide, is less prone to adversely affect a solid electrolyte material prepared by removing the organic solvent from the solid electrolyte composition.

The halide may include at least one cation different from M2. Examples of the different cation include Mg, Ca, Sr, Ba, Zn, Sn, Al, Sc, Ga, Bi, Sb, Zr, Hf, Ti, Ta, Nb, W, Y, Gd, Tb, and Sm.

The halide may include an anion different from X2.

The halide may be one compound having a single composition, or may be a mixture of two or more compounds having composition different from each other.

The halide may be crystalline, or may be amorphous.

The shape of the halide is not limited to any particular shape. The halide may be particulate. Examples of the particulate shape include an acicular shape, a spherical shape, and an ellipsoidal shape. The halide may be in the shape of a pellet or a plate. In the solid electrolyte composition, the halide may be dispersed in the organic solvent while maintaining the particulate shape.

The ratio of the mass of the halide to the sum of the mass of the solid electrolyte and the mass of the halide may be 1% or more and 50% or less. According to such a configuration, a decrease in the ionic conductivity of the solid electrolyte can be effectively suppressed. The ratio in the solid electrolyte composition can be determined by a known chemical analysis method. For example, in the case where the halide is crystalline, the mass ratio can be calculated by X-ray diffraction analysis. In the case where the halide is amorphous, the mass ratio can be calculated by composition analysis such as ICP emission spectrometry.

The ratio may be 10% or more and 50% or less. In the case where the ratio is 50% or less, the solid electrolyte material may have a higher ionic conductivity. The lower limit for the ratio may be 5%. The upper limit for the ratio may be 20%.

The appropriate range of the ratio may be defined by a combination of the lower limit and the upper limit selected from 1%, 5%, 10%, 20%, and 50%.

The solid electrolyte has lithium, whereas the halide may be free of lithium. The solid electrolyte has lithium-ion conductivity, whereas the halide may be free of lithium. They also have these differences.

The halide may be the same compound as the raw material used for the synthesis of the oxyhalide-based solid electrolyte. For example, an oxyhalide-based solid electrolyte is synthesized with use of a raw material containing a halide by mechanochemical milling or the like. The halide used in the synthesis, the synthesized oxyhalide-based solid electrolyte, and an organic solvent are mixed. Thus, a solid electrolyte composition can be prepared. According to such a configuration, a solid electrolyte composition suitable for suppressing a decrease in the ionic conductivity of the solid electrolyte is obtained. The halide included in the raw material of the solid electrolyte is less prone to affect the solid electrolyte material to be obtained.

### (Organic solvent)

The organic solvent may include at least one selected from the group consisting of a halogen-group-containing compound and a hydrocarbon. These are suitable as the solvent for the solid electrolyte composition.

The hydrocarbon is a compound consisting of carbon and hydrogen. The hydrocarbon may be an aliphatic hydrocarbon. The hydrocarbon may be a saturated hydrocarbon, or may be an unsaturated hydrocarbon. The hydrocarbon may be linear, or may be branched. The number of carbons included in the hydrocarbon is not limited to any particular value, and may be seven or more. In the case where the hydrocarbon is used, it is possible to obtain a solid electrolyte composition having an excellent dispersibility.

The hydrocarbon may have a cyclic structure. The cyclic structure may be an alicyclic hydrocarbon, or may be an aromatic hydrocarbon. The cyclic structure may be monocyclic, or may be polycyclic. In the case where the hydrocarbon has the cyclic structure, the oxyhalide-based solid electrolyte can be easily dispersed in an organic solvent. From the viewpoint of enhancing the dispersibility of the oxyhalide-based solid electrolyte of the solid electrolyte composition, the hydrocarbon may include an aromatic hydrocarbon. The hydrocarbon may be an aromatic hydrocarbon.

The halogen-group-containing compound may consist of carbon and hydrogen in a portion other than the halogen group. That is, the halogen-group-containing compound refers to a compound in which at least one of hydrogen atoms included in a hydrocarbon is substituted with a halogen group. Examples of the halogen group include F, Cl, and Br. The halogen-group-containing compound can have a high polarity. The number of halogen groups included in the halogen-group-containing compound is not limited to any particular value. The number of the halogen groups may be, for example, one. The organic solvent can be a liquid in which the oxyhalide-based solid electrolyte can be dispersed. The organic solvent may not dissolve the oxyhalide-based solid electrolyte.

According to the above configuration, it is possible to provide a solid electrolyte composition suitable for suppressing a decrease in the ionic conductivity of the solid electrolyte.

The number of carbons included in the halogen-group-containing compound is not limited to any particular value, and may be seven or more. In this case, the halogen-group-containing compound has a decreased volatility. Consequently, it is possible to stably produce a solid electrolyte composition. The halogen-group-containing compound can have a high molecular weight. That is, the halogen-group-containing compound can have a high boiling point.

The halogen-group-containing compound may have a cyclic structure. The cyclic structure may be an alicyclic hydrocarbon, or may be an aromatic hydrocarbon. The cyclic structure may be monocyclic, or may be polycyclic. In the case where the halogen-group-containing compound has the cyclic structure, the oxyhalide-based solid electrolyte can be easily dispersed in the halogen-group-containing compound. The halogen-group-containing compound may include an aromatic hydrocarbon. The halogen-group-containing compound may be an aromatic compound.

The halogen-group-containing compound may contain only a halogen group as a functional group. In this case, the number of halogens included in the halogen-group-containing compound is not limited to any particular value. The halogen that may be used is at least one or at least two selected from the group consisting of F, Cl, Br, and I. In the case where such a compound is used, the oxyhalide-based solid electrolyte can be easily dispersed. Accordingly, it is possible to obtain a solid electrolyte composition having an excellent dispersibility. Consequently, the solid electrolyte composition can form a solid electrolyte material that has an excellent lithium-ion conductivity and is denser. In the case where such a compound is used, the solid electrolyte composition can easily form, for example, a dense solid electrolyte sheet having reduced pinholes, irregularities, and the like.

The halogen-group-containing compound may be a halogenated hydrocarbon. The halogenated hydrocarbon refers to a compound in which every hydrogen included in a hydrocarbon is substituted with a halogen group. In the case where the halogenated hydrocarbon is used, the oxyhalide-based solid electrolyte can be easily dispersed. Accordingly, it is possible to obtain a solid electrolyte composition having an excellent dispersibility. Consequently, the solid electrolyte composition can form a solid electrolyte material that has an excellent lithium-ion conductivity and is denser. In the case where the halogenated hydrocarbon is used, the solid electrolyte composition can easily form, for example, a dense solid electrolyte sheet having reduced pinholes, irregularities, and the like.

The organic solvent may include, for example, at least one selected from the group consisting of tetralin, ethylbenzene, mesitylene, pseudocumene, xylene, cumene, 1,2,4-trichlorobenzene, chlorobenzene, 2,4-dichlorobenzene, o-chlorotoluene, 1,3-dichlorobenzene, p-chlorotoluene, 1,2-dichlorobenzene, 1,4-dichlorobutane, 3,4-dichlorotoluene, and pentane. The solid electrolyte including an oxygen element and a halogen element has a favorable dispersibility in these organic solvents. That is, the oxyhalide-based solid electrolyte can be easily dispersed in the organic solvent.

According to the above configuration, it is possible to provide a solid electrolyte composition suitable for suppressing a decrease in the ionic conductivity of the solid electrolyte.

The boiling point of the organic solvent is not limited to any particular value, and may be 100°C or higher and 250°C or lower. The organic solvent may be liquid at room temperature (25°C). Since such an organic solvent is less prone to volatilize at room temperature, a solid electrolyte composition can be stably produced. The organic solvent can be easily removed by drying. The organic solvent can be a liquid in which the oxyhalide-based solid electrolyte can be dispersed.

The halide can also be dispersed in the organic solvent.

### (Embodiment 2)

Embodiment 2 will be described below. The matters described in Embodiment 1 may be omitted as appropriate.

Embodiment 2 relates to a solid electrolyte material obtained by removing the organic solvent from the solid electrolyte composition according to Embodiment 1. The solid electrolyte material may be an unshaped material such as a solid electrolyte powder, or may be a shaped material such as a solid electrolyte sheet.

The solid electrolyte material according to Embodiment 2 includes the solid electrolyte and the halide. The solid electrolyte material can exhibit the ionic conductivity inherent in the solid electrolyte. The solid electrolyte and the halide are as described in Embodiment 1.

The solid electrolyte material has, for example, a high lithium-ion conductivity of 2.0 mS/cm or more.

The solid electrolyte material can be used in a battery having excellent charge and discharge characteristics. The battery is, for example, an all-solid-state battery. The all-solid-state battery may be a primary battery, or may be a secondary battery.

The solid electrolyte material can be produced by a method described below.

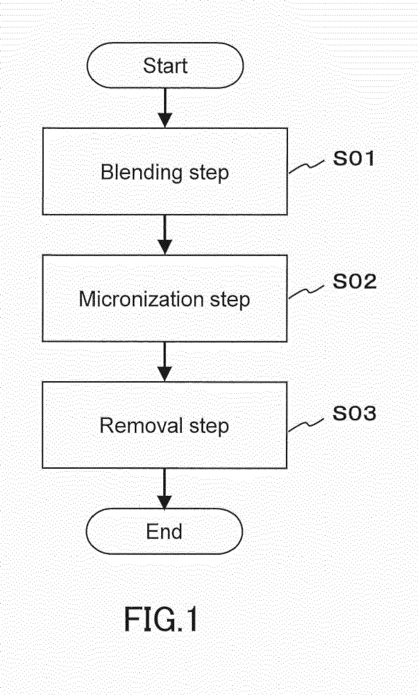

FIG. 1 is a flowchart showing an example of a method for producing a solid electrolyte material. The producing method shown in FIG. 1 includes a blending step S01, a micronization step S02, and a removal step S03. However, these steps are not essential. For example, a solid electrolyte composition obtained through the blending step S01 may be used to prepare a solid electrolyte sheet.

The blending step S01 is a step of mixing materials to obtain a solid electrolyte composition. In the blending step S01, a solid electrolyte, a halide, and an organic solvent are mixed. Thus, the solid electrolyte composition is obtained. The mixing method in the blending step S01 is not limited to any particular method. The ratio of the solid electrolyte, the halide, and the organic solvent can be adjusted as appropriate.

After the blending step S01, the micronization step S02 can be performed.

The micronization step S02 is a step of pulverizing the solid electrolyte for micronization. In the micronization step S02, pulverization is performed, for example, by putting the solid electrolyte composition and pulverization media into a vessel and rotating the vessel. Such a pulverization method is a method using a roll mill, a pot mill, or a planetary ball mill. Alternatively, the pulverization may be performed by putting pulverization media into a pulverization chamber equipped with a rotor, rotating the rotor at a high speed to pass the solid electrolyte composition through the pulverization chamber. Such a pulverization method is, for example, a method using a bead mill. To remove the pulverization media from the pulverized mixture, a sieve or the like may be used. The pulverization conditions can be appropriately set according to the pulverizer.

The pulverization medium has, for example, a spherical or cylindrical shape. The size of the pulverization medium affects the particle diameter of the pulverized solid electrolyte. For example, a spherical pulverization medium having a diameter of 1.0 mm or less should be desirably used.

The removal step S03 is performed, for example, after the micronization step S02.

The removal step S03 is a step of removing the organic solvent from the solid electrolyte composition.

The organic solvent may be removed from the solid electrolyte composition, for example, by drying under reduced pressure.

The drying under reduced pressure means removing the organic solvent from the solid electrolyte composition in an atmosphere of a pressure lower than atmospheric pressure. The atmosphere of the pressure lower than atmospheric pressure is, for example, an atmosphere of a gauge pressure of -0.01 MPa or less. The drying under reduced pressure may be vacuum drying. The vacuum drying means removing the organic solvent, for example, at a pressure equal to or lower than vapor pressure and at a temperature 20°C lower than the boiling point of the organic solvent. In the drying under reduced pressure, the solid electrolyte composition may be heated, for example, at an atmospheric temperature of 50°C or higher and 250°C or lower for drying.

In the removal step S03, the solid electrolyte composition may be heated in an inert gas atmosphere thus to remove the organic solvent from the solid electrolyte composition. The heating may be performed while flowing an inert gas. Examples of the inert gas include nitrogen and argon. The atmospheric temperature for the heating is, for example, 50°C or higher and 250°C or lower.

The presence of the organic solvent can be confirmed, for example, by Fourier transform infrared spectroscopy (FT-IR), X-ray photoelectron spectroscopy (XPS), gas chromatography (GC), or gas chromatography-mass spectrometry (GC/MS).

Through the above steps, the solid electrolyte material according to Embodiment 2 is obtained.

### Examples

The present disclosure will be described in detail below with reference to examples.

### <Example 1>

### (Preparation of solid electrolyte composition)

Into a pulverization pot of a planetary ball mill, 3.96 g of LiTaOCl₄, 0.04 g of TaCl₅, and 16 g of p-chlorotoluene were put and stirred lightly with a spatula. Thus, a solid electrolyte composition according to Example 1 was obtained. LiTaOCl₄ is hereinafter referred to as "LTOC".

### (Micronization step)

Into the pulverization pot of the planetary ball mill above, 25 g of spherical pulverization media made of zirconia and having a diameter of 0.5 mm was put. The solid electrolyte composition was pulverized under conditions of 300 rpm and 60 minutes with a planetary ball mill (PULVERISETTE 7 manufactured by Fritsch GmbH). Subsequently, the pulverization media were removed with a sieve having an aperture size of 212 µm. Thus, the pulverized solid electrolyte composition (i.e., micronized solid electrolyte composition) was obtained.

### (Removal of organic solvent)

The pulverized solid electrolyte composition was put into a sealed beaker made of glass, the sealed beaker was heated to 200°C with nitrogen flowing at a flow rate of 10 L/min thus to remove the organic solvent from the solid electrolyte composition over 2 hours. Thus, a solid electrolyte material was obtained.

### (Measurement of lithium-ion conductivity)

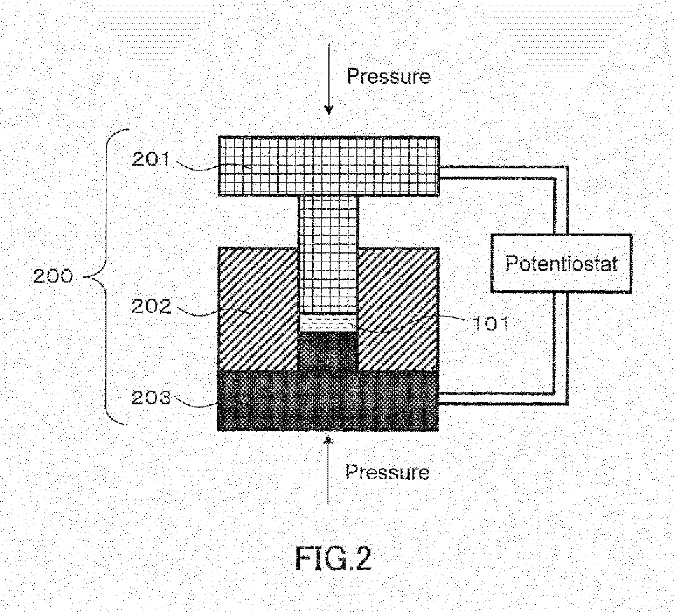

FIG. 2 is a schematic view showing a method for evaluating the lithium-ion conductivity of the solid electrolyte material. A pressure-molding die 200 included an upper punch 201, a die 202, and a lower punch 203. The die 202 was made of polycarbonate, which is insulating. The upper punch 201 and the lower punch 203 were each made of stainless steel, which is electronically conductive.

The pressure-molding die 200 shown in FIG. 2 was used to measure the ionic conductivity of the solid electrolyte material by the following method.

In a dry atmosphere with a dew point of -50°C or lower, the pressure-molding die 200 was filled with a solid electrolyte material 101 according to Example 1. The upper punch 201 and the lower punch 203 were used to apply a pressure of 300 MPa to the solid electrolyte material 101.

While the pressure was applied, the upper punch 201 and the lower punch 203 were connected to a potentiostat (EC-Lab manufactured by Bio-Logic SAS) equipped with a frequency response analyzer. The upper punch 201 was connected to the working electrode and the potential measurement terminal. The lower punch 203 was connected to the counter electrode and the reference electrode. The lithium-ion conductivity of the solid electrolyte material 101 was measured at 25°C by an electrochemical impedance measurement method. The results indicate an ionic conductivity of 3.4 × 10⁻³ S/cm.

### (Average particle diameter)

The solid electrolyte material was observed with a scanning electron microscope (Regulus8230 manufactured by Hitachi High-Technologies Corporation, observation magnification of 10000 times) to measure the unidirectional diameters (Feret diameters) of 30 primary particles selected randomly. The simple average of the obtained measured values was calculated. The calculated value was defined as the average particle diameter.

The solid electrolyte material of Example 1 had an average particle diameter of 2.0 µm.

### <Example 2>

A solid electrolyte material of Example 2 was obtained by the same method as in Example 1 except that 3.6 g of LTOC, 0.4 g of TaCl₅, and 16 g of p-chlorotoluene were used.

The ionic conductivity and the average particle diameter of the solid electrolyte material of Example 2 were measured by the same method as in Example 1. The results indicate an ionic conductivity of 4.0 × 10⁻³ S/cm and an average particle diameter of 2.6 µm.

### <Example 3>

A solid electrolyte material of Example 3 was obtained by the same method as in Example 1 except that 3.2 g of LTOC, 0.8 g of TaCl₅, and 16 g of p-chlorotoluene were used.

The ionic conductivity and the average particle diameter of the solid electrolyte material of Example 3 were measured by the same method as in Example 1. The results indicate an ionic conductivity of 4.1 × 10⁻³ S/cm and an average particle diameter of 1.9 µm.

### <Example 4>

A solid electrolyte material of Example 4 was obtained by the same method as in Example 1 except that 2 g of LTOC, 2 g of TaCl₅, and 16 g of p-chlorotoluene were used.

The ionic conductivity and the average particle diameter of the solid electrolyte material of Example 4 were measured by the same method as in Example 1. The results indicate an ionic conductivity of 4.1 × 10⁻³ S/cm and an average particle diameter of 1.8 µm.

### <Example 5>

A solid electrolyte material of Example 5 was obtained by the same method as in Example 1 except that 3.2 g of LTOC, 0.8 g of TaBrs, and 16 g of p-chlorotoluene were used.

The ionic conductivity and the average particle diameter of the solid electrolyte material of Example 5 were measured by the same method as in Example 1. The results indicate an ionic conductivity of 2.9 × 10⁻³ S/cm and an average particle diameter of 1.8 µm.

### <Example 6>

A solid electrolyte material of Example 6 was obtained by the same method as in Example 1 except that 3.2 g of LTOC, 0.8 g of NbCl₅, and 16 g of p-chlorotoluene were used.

The ionic conductivity and the average particle diameter of the solid electrolyte material of Example 6 were measured by the same method as in Example 1. The results indicate an ionic conductivity of 2.2 × 10⁻³ S/cm and an average particle diameter of 2.0 µm.

### <Reference Example 1 >

A solid electrolyte material of Reference Example 1 was obtained by the same method as in Example 1 except that 4 g of LTOC and 16 g of p-chlorotoluene were used. That is, the solid electrolyte composition of Reference Example 1 was free of a halide including M2 and X2.

The ionic conductivity and the average particle diameter of the solid electrolyte material of Reference Example 1 were measured by the same method as in Example 1. The results indicate an ionic conductivity of 1.4 × 10⁻³ S/cm and an average particle diameter of 1.4 µm.

The ionic conductivity and the average particle diameter of the solid electrolyte materials of the examples and the reference example are shown in Table 1. In Table 1 and Discussion, the ratio of the mass of the halide to the sum of the mass of the solid electrolyte and the mass of the halide is simply expressed as "mass ratio".

**[Table 1]**

| | Solid electrolyte | Halide | Mass ratio (%) | Ionic conductivity (mS/cm) | Average particle diameter (µm) |
|---|---|---|---|---|---|
| Example 1 | LiTaOCl₄ | TaCl₅ | 1 | 3.4 | 2.0 |
| Example 2 | LiTaOCl₄ | TaCl₅ | 10 | 4.0 | 2.6 |
| Example 3 | LiTaOCl₄ | TaCl₅ | 20 | 4.1 | 1.9 |
| Example 4 | LiTaOCl₄ | TaCl₅ | 50 | 4.1 | 1.8 |
| Example 5 | LiTaOCl₄ | TaBrs | 20 | 2.9 | 1.8 |
| Example 6 | LiTaOCl₄ | NbCl₅ | 20 | 2.2 | 2.0 |
| Reference Example 1 | LiTaOCl₄ | Not included | - | 1.4 | 1.4 |

### (Discussion)

The solid electrolyte materials of Examples 1 to 6 had a higher ionic conductivity than Reference Example 1 had. That is, the solid electrolyte compositions of Examples 1 to 6 maintained a high ionic conductivity even after micronization.

As is obvious from the comparison of Examples 2 to 4 with Example 1, the solid electrolyte materials having a mass ratio of 10% or more and 50% or less had a higher ionic conductivity.

As described above, the solid electrolyte composition of the present disclosure was suitable for suppressing a decrease in the ionic conductivity of the solid electrolyte due to the steps of micronization and organic solvent removal.

In the present examples, LiTaOCl₄ was used as the solid electrolyte. However, the technique of the present disclosure is useful even for oxyhalide-based solid electrolytes including niobium. Tantalum and niobium both belong to Group 5 of the periodic table and exhibit quite similar chemical properties. Furthermore, oxyhalide-based solid electrolytes including Nb exhibit ionic conductivity close to the ionic conductivity of LiTaOCl₄. Therefore, oxyhalide-based solid electrolytes including Nb, such as LiNbOCl₄ and LiTaₓNb₁₋ₓOCl₄ (0 < x < 1), are presumed to exhibit an effect similar to the effect in the LTOC as well.

### INDUSTRIAL APPLICABILITY

The solid electrolyte composition according to the present disclosure is used, for example, in the production of all-solid-state lithium-ion secondary batteries.

## Claims

1. A solid electrolyte composition comprising:
a solid electrolyte comprising Li, M1, O, and X1;
a halide comprising M2 and X2; and
an organic solvent, wherein
the M1 is at least one selected from the group consisting of Nb and Ta,
the M2 is at least one selected from the group consisting of Nb and Ta,
the X1 is at least one selected from the group consisting of F, Cl, Br, and I, and
the X2 is at least one selected from the group consisting of F, Cl, Br, and I.

2. The solid electrolyte composition according to claim 1, wherein the X1 comprises Cl.

3. The solid electrolyte composition according to claim 1 or 2, wherein the M1 comprises Ta.

4. The solid electrolyte composition according to any one of claims 1 to 3, wherein the solid electrolyte comprises LiTaOCl₄.

5. The solid electrolyte composition according to any one of claims 1 to 4, wherein the X2 comprises Cl.

6. The solid electrolyte composition according to any one of claims 1 to 5, wherein the M2 comprises Ta.

7. The solid electrolyte composition according to any one of claims 1 to 6, wherein the halide comprises TaCl₅.

8. The solid electrolyte composition according to any one of claims 1 to 7, wherein the M1 is the same as the M2.

9. The solid electrolyte composition according to any one of claims 1 to 8, wherein the X1 is the same as the X2.

10. The solid electrolyte composition according to any one of claims 1 to 9, wherein the organic solvent comprises at least one selected from the group consisting of a halogen-group-containing compound and a hydrocarbon.

11. The solid electrolyte composition according to claim 10, wherein
the organic solvent comprises at least one selected from the group consisting of tetralin, ethylbenzene, mesitylene, pseudocumene, xylene, cumene, 1,2,4-trichlorobenzene, chlorobenzene, 2,4-dichlorobenzene, o-chlorotoluene, 1,3-dichlorobenzene, p-chlorotoluene, 1,2-dichlorobenzene, 1,4-dichlorobutane, 2,4-dichlorotoluene, 3,4-dichlorotoluene, and pentane.

12. The solid electrolyte composition according to any one of claims 1 to 11, wherein
a ratio of a mass of the halide to a sum of a mass of the solid electrolyte and the mass of the halide is 1% or more and 50% or less.

13. The solid electrolyte composition according to claim 12, wherein
the ratio is 10% or more and 50% or less.

14. A solid electrolyte material comprising:
a solid electrolyte comprising Li, M1, O, and X1; and
a halide comprising M2 and X2, wherein
the M1 is at least one selected from the group consisting of Nb and Ta,
the M2 is at least one selected from the group consisting of Nb and Ta,
the X1 is at least one selected from the group consisting of F, Cl, Br, and I, and
the X2 is at least one selected from the group consisting of F, Cl, Br, and I.

15. A method for producing the solid electrolyte composition according to any one of claims 1 to 13, the method comprising:
synthesizing a solid electrolyte with use of a raw material comprising a halide; and
mixing the solid electrolyte, the halide, and an organic solvent to prepare the solid electrolyte composition.
